Europäisches Patentamt

European Patent Office

Office européen des brevets

(19)

(11) Publication number : **0 520 706 A1**

# (12) EUROPEAN PATENT APPLICATION

(21) Application number : **92305659.2**

(22) Date of filing : **19.06.92**

(51) Int. Cl.⁵ : **H04Q 3/52,** G06F 15/16, H04L 12/56

(30) Priority : **25.06.91 JP 180318/91**

(43) Date of publication of application :
**30.12.92 Bulletin 92/53**

(84) Designated Contracting States :
**AT BE CH DE DK ES FR GB GR IT LI LU NL PT SE**

(71) Applicant : **GRAPHICO CO. LTD.**
**11-14, Higashikanda 1-chome**
**Chiyoda-ku, Tokyo 101 (JP)**

(72) Inventor : **Matsumoto, Kinya**
**3-18-403, Takakura 2-chome**
**Iruma-shi, Saitama-ken 358 (JP)**

(74) Representative : **Skone James, Robert Edmund**
**GILL JENNINGS & EVERY 53-64 Chancery Lane**
**London WC2A 1HN (GB)**

(54) Integrated crossjoint switch and parallel processing system using the same.

(57) Disclosed is an improved integrated circuit crossbar switch (11) and a parallel processing system using the same. The crossbar switch comprises a lattice of signal paths (12) each comprising a pair of signal conductors (12A, 12B) and a plurality of contacts (13,14) each arranged on each crossing in the lattice network. Also, each crossing has a control signal line (17) for controlling the opening-and-closing of the contact. The parallel processing system comprises a stack of bus-printed disks (21) each having an integrated circuit crossbar switch (11) just described. A plurality of pairs of communication lines (23A,23B) of equal length are printed on each disk, each pair extending from the corresponding pair of signal conductors of the centre crossbar switch. Likewise, control lines (27) radially extend from the corresponding control signal lines (17) of the central crossbar switch. Boards (31) each having a processing or switching control unit can be electrically and mechanically connected to the stack of bus-printed disks. Use of a pair of communication conductors for each radial communication path permits simultaneous data transfer between one processing unit and each of two other processing units, according increasing the processing speed.

Fig. 1

EP 0 520 706 A1

The present invention relates to a crossbar switch comprising a lattice network having an opening-and-closing contact arranged at each crossing and means to control the opening-and-closing contact, and a parallel processing system using such crossbar switches to permit simultaneous processing among associated processing units at an increased speed.

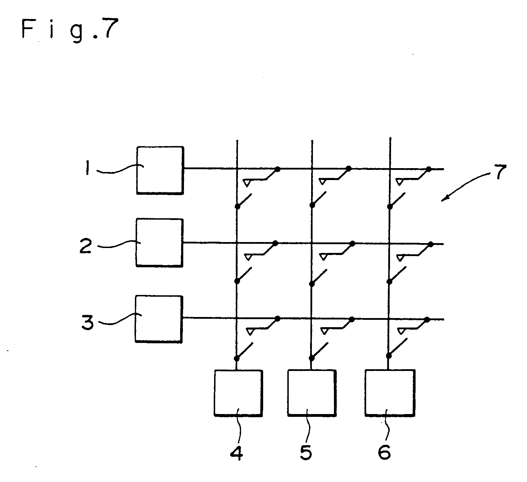

Fig.7 shows a conventional parallel processing system having a plurality of processing units such as processors or memories 1 to 6 connected via an associated crossbar switch 7.

Disadvantageously in this prior art arrangement the number of contacts and associated signal lines increases with the increase of the number of processing units to be connected, and therefore, such crossbar switch cannot be actually made for an increased number of processing units to be connected. To limit signal lines in a parallel processing system to a permissible number the number of associated processing units is limited or series-transfer of data is effected partly in place of parallel-transfer of data. In this latter case the speed at which data are processed will be decreased accordingly.

In accordance with the present invention, an integrated circuit crossbar switch comprises a lattice of signal paths each comprising at least a pair of signal conductors; and a plurality of opening-and-closing contacts one at each crossing in the lattice, each crossing having a control signal line for the opening-and-closing contact.

The present invention provides an improved crossbar switch appropriate for use in a parallel processing system.

Each signal path uses a pair of signal conductors, thereby permitting each associated processing unit to use one conductor as an input line and the other conductor as an output line, thus permitting the simultaneous inputting and outputting of data, and permitting each associated processing unit to transfer data to and from other two associated processing units at one time. These simultaneous performances permit quick data processing.

The invention can be utilised in a parallel processing system comprising a radial bus assembly comprising a stack of disks each having an integrated circuit crossbar switch according to the invention fixed at its centre;

a plurality of pairs of communication lines of equal length, each pair radially extending from the corresponding pair of signal conductors of said crossbar switch and terminating on the circumference of the disk; a plurality of control lines each radially extending from the corresponding control signal line of said crossbar switch and terminating on the circumference of the disk; and a plurality of boards each having a processing unit or a switching control unit, and means to electrically connect said processing unit or switching control unit to the termination of each of said communication or control ines, said boards being arranged radially around said stack of disks.

All crossbar switchs are arranged vertically on the common center axis of the radial bus assembly, and all communication line pairs radiating from the center crossbar switchs in the individual disks of the radial bus assembly are arranged vertically in angular registration, thus making up vertical equi-phase bus arrangements radiating from the common center axis. All communication lines are allotted to data lines, address lines, control lines, and so forth. The switching control unit in a selected vertical arrangement will control all opening-and-closing contacts according to a predetermined sequence, thus permitting all associated processing units to be electrically connected to each other via selected communication ines and crossbar switchs for transferring and processing data simutaneously.

One vertical group of communication lines to make up one bus can be used for the sake of data inputting whereas another vertical group of communication lines to make up another bus can be used for the sake of data outputting. Simultaneous use of these two vertical groups of communication ines by one processing unit to communicate with two other processing units for transferring data permits quickest processing of data, and increase of the degree of freedom with which parallel data processing can be effected.

Use of communication lines of equal length in a parallel processing system according to the present invention assures that communication distance is one and same between ones selected among all processing units, facilitating data communication control to attain stable, quick data transfer between selected processing units.

Other objects and advantages of the present invention will be understood from the following description of preferred embodiments of the present invention, which are shown in accompanying drawings:

Fig.1 is an equivalent circuit of crossbar switch according to one embodiment of the present invention;

Fig.2 is a plane view of a disk in a parallel processing system according to one embodiment of the present invention;

Fig.3 is a longitudinal section of a male plug-and-female receptacle connector used in the parallel processing system of Fig.2;

Fig.4 is a perspective view of the parallel processing system;

Fig.5 is a perspective view of the parallel processing system having a plurality of radial boards attached to its circumference;

Fig.6 is a flow chart showing one example of parallel data processing in the parallel processing system and;

Fig.7 is an equivalent circuit of a conventional crossbar switch arrangement.

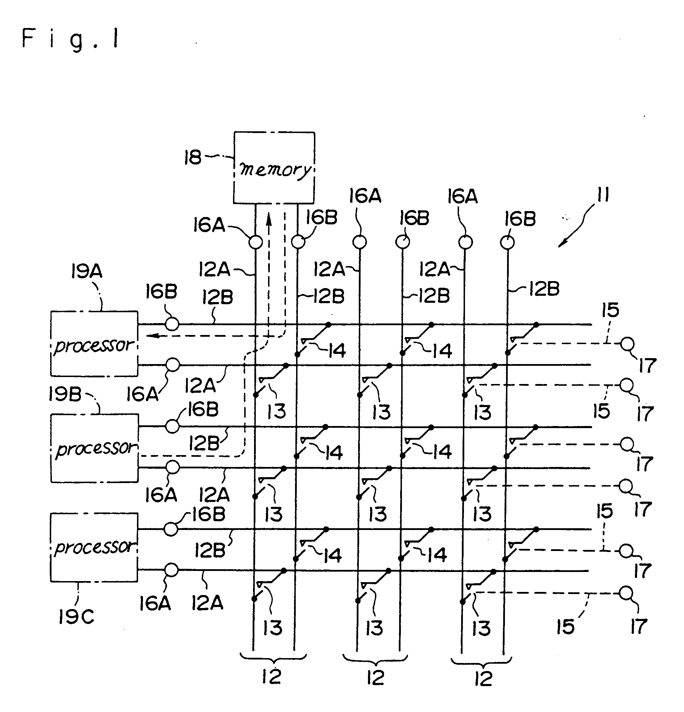

A crossbar switch whose equivalent circuit is shown in Fig.1 is made in the form of integrated circuit according to the MOS techniques, and is packaged and equipped with pin terminals for external connections.

As seen from Fig.1, an integrated circuit crossbar switch 11 comprises a lattice of signal paths 12 each comprising a pair of signal conductors 12A and 12B. An opening-and-closing contact 13 is arranged at each crossing of signal conductors 12A, and an opening-and-closing contact 14 is arranged at each crossing of signal conductors 12B in the lattice network. Each signal conductor 12A or 12B is ended with a communication terminal 16A or 16B, and each opening-and-closing contact 13 or 14 is connected to a control input terminal 17 via an associated control signal conductor 15. The crossbar switch 11 has extra terminals such as power terminals or ground terminals (not shown).

Assume that a memory 18 and processors 19A to 19C are connected to selected communication terminal pairs 16A and 16B, and that data are transferred among these memory 18 and processors 19A to 19C. Simultaneous closure of selected contacts 13 and 14 permits the processor 19B to write data in the memory 18 via the signal conductor 12A as indicated by broken line, and at the same time, the processor 19A to read data from the memory 18 via the signal conductor 12B as indicated by broken line.

Thus, the crossbar switch 11 permits the simultaneous use of one signal conductor 12A of one signal path 12 for a first processor unit to input data to a second processor unit and the other signal conductor 12B of the signal path 12 for the second processor unit to output data to a third processor unit. One processor unit (second processor unit) can transfer data to and from two processor units (first and third processor units) simultaneously, and accordingly the speed at which data can be processed is increased.

In this particular embodiment a single signal path 12 contains a pair of signal conductors 12A and 12B. It, however, should be noted that a single signal path can contain signal conductors as many as required.

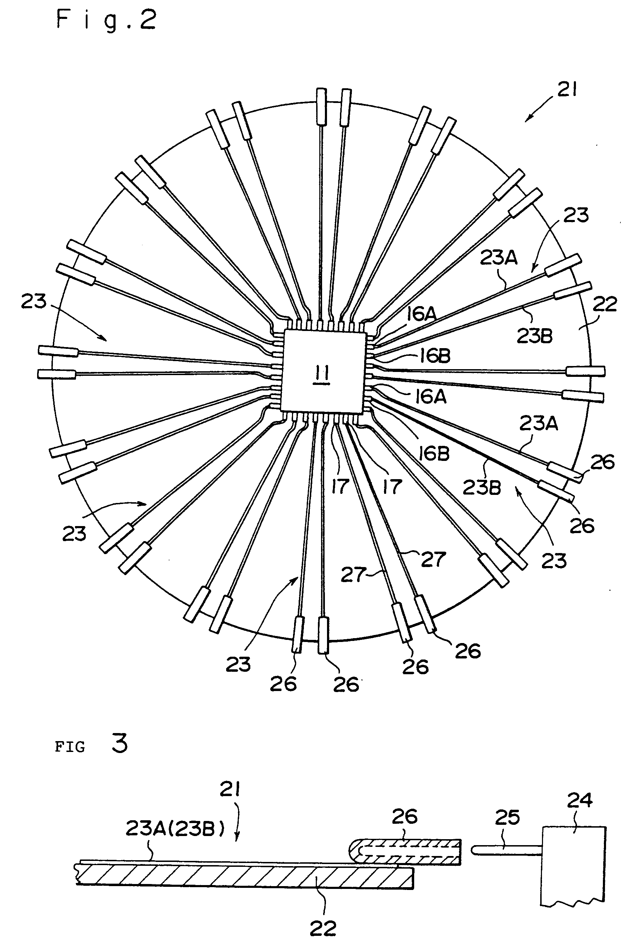

With reference to Figs.2 to 5, a parallel processing system according to one embodiment of the present invention is described below.

As seen from Fig.2, a bus-printed disk 21 has an integrated circuit crossbar switch 11 attached to the center of the circular printed board 22.

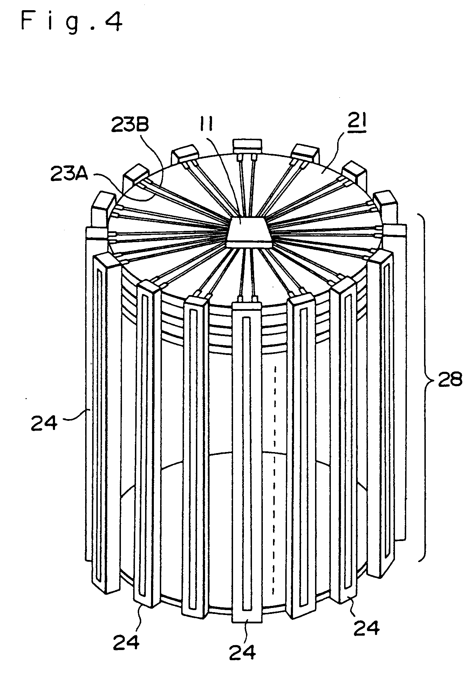

As seen from the drawing, each pair of communication lines 23A and 23B of equal length are connected at one end thereof to a corresponding pair of communication terminals 16A and 16B of the crossbar switch 11, and the communication lines 23A and 23B are connected at the other ends thereof to female receptacles 26 attached to the circumference of the disk 23, as seen from Fig.3. These female receptacles 26 are adapted to accomodate male pins 25 as later described. Also, each pair of control lines 27 and 27 of equal length are connected at one ends thereof to a corresponding pair of control terminals 17 and 17 of the crossbar switch 11, and the control lines 27 and 27 are connected at the other ends thereof to female receptacles 26 attached to the circumference of the disk 23.

A plurality of bus-printed disks each having an integrated circuit crossbar switch 11 attached to its center are arranged vertically at same regular intervals as the male pins 25 vertically arranged and fixed to a male pin-and-female receptacle connector 24, and these bus-printed disks are integrally connected by a center post (not shown). As shown in Fig.4, a radial bus assembly 28 results by inserting the male pins 25 of the male pin-and-female receptacle connectors 24 into the female receptacles 26 which are fixed to the circumferences of the disks.

The radial communication line pairs 23A, 23B and control line pairs 27, 27 of all disks are arranged vertically in angular registration, and are separated into groups by the male pin-and-female receptacle connectors 24, 25. Thus, each vertical group of equiphase communication paths 23 constitutes a semi-bus assembly radiating from the vertical arrangement of the integrated circuit crossbar switchs 11. Semi-bus assemblies as many as the communication and control paths on one bus-printed disk can be allotted to data lines, address lines or control lines.

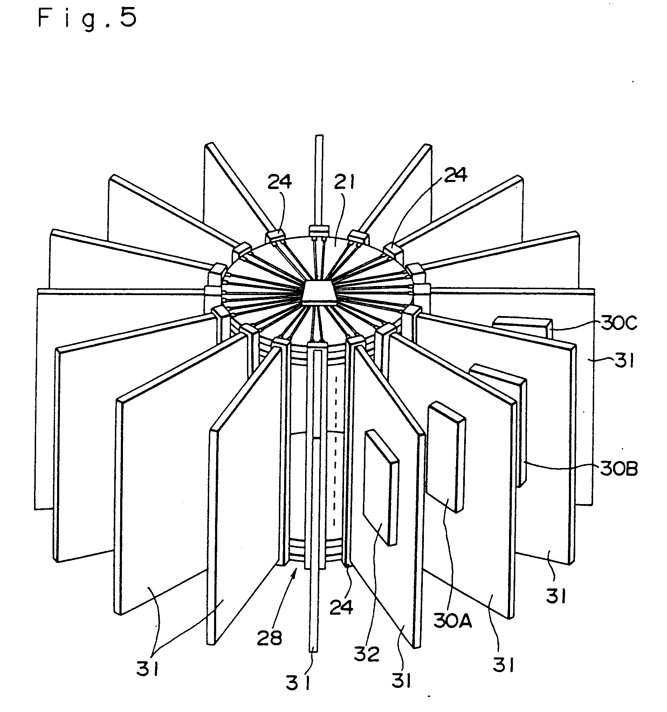

As shown in Fig.5, a plurality of radial printed boards 31 each bearing a processing unit 30A, 30B, 30C..are integrally combined with the radial bus assembly 28 by inserting the male pins of each radial printed board 31 into the female receptacles of each male pin-and-female receptacle connector 24. The male pins of a selected radial printed board 31 bearing a crossbar switch control 32 are inserted into the female receptacles of the male pin-and-female receptacle connector 24, the male pins of which are inserted into the receptacles 26 soldered to the control lines on the disks. Examples of such processing units 30A, 30B, 30C..are central processor units, memories, input/output processors for controlling keyboards or displays.

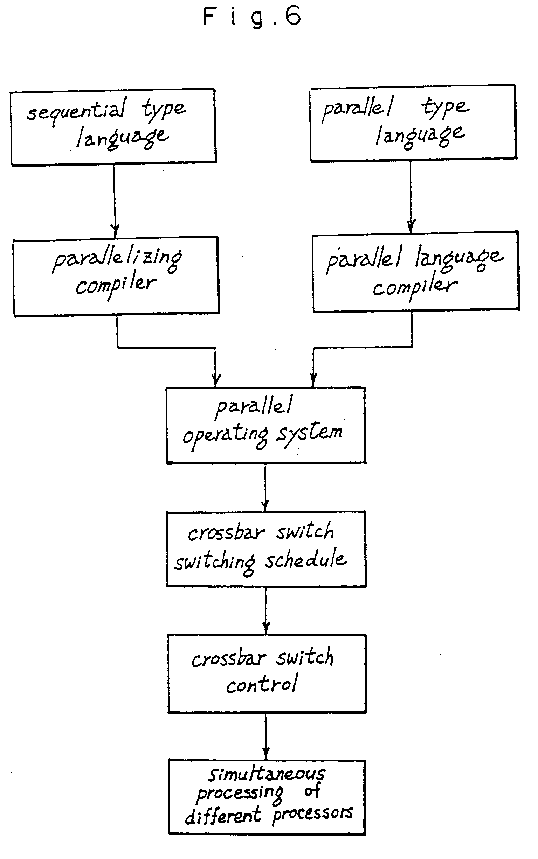

Fig.6 shows how parallel processing may be effected in this parallel processing system.

Assume that a program according to which a given task such as color imaging processing is performed, is prepared in a sequential type language such as FORTRAN or in a parallel type language to be stored in memories.

For the program expressed in the sequential type language, a parallelizing compiler will find out which parts of the program can be parallel-performed, and then it will rearrange such parts in parallel tasks. As for the program expressed in the parallel type language a parallel language compiler will selectively pick up parallel parts so that parallel machine codes may be prepared.

The operating system of parallel machine will carry out dynamic allotment of processors, and the switching controlling schedule of each crossbar switch 11 will be prepared on the basis of the allotment of processors. In this way parallel-processing will be handled. The crossbar switch controller 32 performs the closing-and-opening of all crossing contacts 13, 14 in each crossbar switch 11 according to the schedule, thereby permitting all processing units 30A, 30B, 30C...to carry out simultaneously the processing of data.

Bus printed disks 21 are shown as having printed patterns on one side. They may have printed patterns on both sides, or may be of a multi-layered disk having signal conductors printed on each layer.

In the case where a parallel processing system according to the present invention is used in processing color-image data and outputting the processed data to a display device, red, green and blue data retrieved from different memories are further processed, and then the processed data are further transported to selected I/0 CPUs by controlling the crossbar switch of the parallel-processing system, thus omitting data transfer between memories.

In the case where a parallel processing system according to the present invention is used in processing color printing, selected CPUs of the parallel processing system are allotted to yellow, cyan, magenta and black to perform required processings simultaneously. When processing large amounts of data it is possible to store divisions of data in different sections of a selected memory, thereby permitting distribution of the CPUs' processing domain. In this case data transfer can be substantially saved, and accordingly quick processing results.

In the case where a parallel processing system according to the present invention is used in producing motion pictures such as animated cartoons, one CPU can be allotted to each frame to perform necessary processing, thereby permitting real time processing.

**Claims**

1. An integrated circuit crossbar switch (11) comprising a lattice of signal paths (12) each comprising at least a pair of signal conductors (12A, 12B); and a plurality of opening-and-closing contacts (13,14) one at each crossing in the lattice, each crossing having a control signal line (17) for the opening-and-closing contact.

2. A parallel processing system comprising a switch (11) according to claim 1; and a number of processors (19A,19C), each processor being connected to the signal conductors of a respective signal path (12), whereby the contacts (13,14) are operable to connect a signal path with at least two processors simultaneously.

3. A parallel processing system comprising a radial bus assembly comprising a stack of disks (21) each having an integrated circuit crossbar switch (11) according to claim 1 fixed at its centre; a plurality of pairs of communication lines (23A,23B) of substantially equal length, each pair radially extending from the corresponding pair of signal conductors (12A,12B) of said crossbar switch (11) and terminating on the circumference of the disk; a plurality of control lines (27) each radially extending from the corresponding control signal line (17) of said crossbar switch and terminating on the circumference of the disk; and a plurality of boards (31) each having a processing unit or a switching control unit and means (24) to electrically connect said processing unit or switching control unit to the termination of each of said communication lines, said boards being arranged radially around said stack of disks.

Fig.1

Fig.2

FIG 3

Fig.4

Fig.5

# Fig.6

```
┌─────────────────┐        ┌─────────────────┐
│ sequential type │        │ parallel  type  │
│    language     │        │    language     │
└─────────────────┘        └─────────────────┘
         │                          │
         ▼                          ▼
┌─────────────────┐        ┌─────────────────┐
│  parallelizing  │        │parallel language│
│    compiler     │        │    compiler     │
└─────────────────┘        └─────────────────┘
         │                          │
         └──────────┐   ┌───────────┘
                    ▼   ▼
           ┌─────────────────┐
           │    parallel     │
           │operating system │
           └─────────────────┘
                    │
                    ▼
           ┌─────────────────┐
           │ crossbar switch │
           │switching schedule│
           └─────────────────┘
                    │
                    ▼
           ┌─────────────────┐
           │ crossbar switch │
           │    control      │
           └─────────────────┘
                    │
                    ▼
           ┌─────────────────┐
           │  simultaneous   │
           │  processing of  │
           │different processors│
           └─────────────────┘
```

F i g.7

**European Patent Office**

# EUROPEAN SEARCH REPORT

Application Number

| | DOCUMENTS CONSIDERED TO BE RELEVANT | | EP 92 30 5659 | |
|---|---|---|---|

| Category | Citation of document with indication, where appropriate, of relevant passages | Relevant to claim | CLASSIFICATION OF THE APPLICATION (Int. Cl.5) |
|---|---|---|---|
| X | WO-A-8 808 167 (LEE DATA CORP.)<br>* figures 1-3 *<br>* page 7, line 15 - line 30 *<br>* page 24, line 2 - line 17 *<br>* claims 1,2,5,32 *<br>--- | 1-3 | H04Q3/52<br>G06F15/16<br>H04L12/56 |
| Y | AFIPS NATIONAL COMPUTER CONFERENCE<br>July 1985, CHICAGO (US)<br>pages 267 - 277;<br>VASON P. SRINI: 'An Architecture for doing concurrent systems research'<br>* page 275, right column, line 3 - page 276, left column, line 34 *<br>--- | 1-3 | |
| Y | US-A-5 027 346 (HOSHI)<br>* figure 4 *<br>--- | 1-3 | |
| A | IEEE INTERNATIONAL CONFERENCE ON COMPUTER DESIGN:VLSI IN COMPUTERS & PROCESSORS<br>October 1988, RYE BROOK, NY (US)<br>pages 526 - 532;<br>MIRACKY ET AL: 'Design of a 64-Processor by 128-Memory Crossbar Switching Network'<br>* page 526, paragraph 2.1 *<br>* page 527, paragraph 2.4 *<br>* page 529, paragraph 4.2 *<br>--- | 1-3 | TECHNICAL FIELDS SEARCHED (Int. Cl.5)<br><br>H04Q<br>H04L<br>G06F |
| A | IEEE-AIAA 7TH DIGITAL AVIONICS SYSTEMS CONFERENCE<br>October 1986, FORT WORTH (US)<br>pages 536 - 544;<br>EVANS: 'Fault Tolerant High-speed Switched Data Network'<br>* page 536, left column, line 1 - line 27 *<br>* page 536, right column, paragraph 4 *<br>* page 537; figure 1 *<br>--- | 1-3 | |
| A | GB-A-2 188 211 (STC PLC)<br>* claims 1-6 * | 1-3 | |

The present search report has been drawn up for all claims

| Place of search | Date of completion of the search | Examiner |
|---|---|---|
| THE HAGUE | 05 AUGUST 1992 | DE MUYT H.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)